# EUROPEAN PATENT SPECIFICATION

(11) **EP 1 398 978 B1**
(45) Date of publication and mention of the grant of the patent: **05.11.2014**
(21) Application number: 03103302.0
(22) Date of filing: 05.09.2003
(51) Int. Cl.: H04W 76/02, H04Q 3/66

(54) **Method of establishing a connection, and telecommunication arrangement**
Ein Verfahren zur Erstellung einer Verbindung und eine Telekommunikationsanlage
Un procédé d'établissement d'une communication et une installation de télécommunication

(30) Priority: 10.09.2002 FI 20021616
(43) Date of publication of application: 17.03.2004
(73) Proprietor: TeliaSonera AB, 10663 Stockholm (SE)
(72) Inventor: Korhonen, Jouni, 11100 Riihimäki (FI); Jalkanen, Tero, 00710 Helsinki (FI); Väänänen, Kai, 02940 Espoo (FI)
(74) Representative: Kolster Oy Ab

(56) References cited:
- EP-A- 0 608 066
- US-B1- 6 269 157
- BLYTH K J ET AL: "Designing a GPRS roaming exchange service" PROCEEDINGS OF 3G 2001 INTERNATIONAL CONFERENCE ON 3G MOBILE COMMUNICATION TECHNOLOGIES, 26 March 2001 (2001-03-26), - 28 March 2001 (2001-03-28) pages 201-205, XP002467173

## Description

### FIELD

The invention relates to telecommunication systems and methods used therein for establishing a connection.

### BACKGROUND

In telecommunication systems, terminal-originating connections often have to be established not only by using the home network, but also networks external to the service area of the home network, such as the Internet. The establishment of a connection from a terminal to a terminal outside the service area of the home network is often subject to the use of the services of various operators and telecommunication networks. Different operator and network services price their services independently. For example, the prices of long-distance calls of different operators vary considerably depending on e.g. the time of day, the day of the week or the duration of the call. This being so makes it difficult for clients using operator and network services to know the use of which operator or network services would be the most advantageous at each particular time. Network services also show significant quality differences due to for instance peak periods, which a user of services cannot be aware of in advance.

In prior art solutions, clients are able to use for instance services having more favourable prices based on separate contracts made with operators. A way to obtain for instance inexpensive connections is to follow operators' advertising and quotations and, based thereon, to select a given operator's service. In prior art solutions, the client is responsible for selecting a suitable operator and/or network service. For example, each time when establishing a call, the user has to prefix the code of a given operator to the number dialled in order to be able to have benefit of an advantageous service provided by said operator. If the client forgets to prefix the code of the operator providing inexpensive connections to the number when dialling for instance a long-distance number, the client may be charged for the long-distance call established according to the price of the most expensive possible service provider. The establishment of calls is also laborious, since operators' codes have to be separately prefixed to telephone numbers when the intention is to utilize inexpensive connections.

In prior art solutions, clients have no real-time chance to affect the route along which the connection is established. For example, during working hours qualitative factors of the properties required of connections may be more desirable than inexpensiveness, whereas during leisure time, the quality of the call is not as important as are inexpensive prices.

US 6,269,157 discloses a solution where a buyer terminal requests a moderator for a service, which then starts a bidding process for finding out the most economical routing possibilities for the buyer. However, US 6,269,157 does not teach other solutions than to use this kind of bidding process for finding routing information for the most inexpensive routes.

EP 0608066 discloses a solution where service rate information is made available in a database, and this information is used as a basis for determining which carrier to use at any given time in the routing of a call. However, also EP 0608066 does not seem to say anything about any other data than price rate data that could affect the selection of routing.

### BRIEF DESCRIPTION

The object of the invention is to provide a method and an arrangement for implementing the method so as to alleviate problems associated with the prior art. This is achieved by a method of setting up a connection in a telecommunication arrangement, the telecommunication arrangement comprising: a first terminal in a first telecommunication network, a second terminal in a second telecommunication network, at least one operator server for maintaining the telecommunication networks and a service network connecting the telecommunication networks, in which method: a connection set-up request is sent to the operator server, the connection set-up request is relayed to the service network connecting the telecommunication networks. The method of the invention comprises: executing, by the service network, the retrieval of data affecting the selection of routing from one or more operator servers when the connection set-up request is received; sending, from the service network, said data affecting the selection of routing to the first terminal; selecting the desired route based on said data affecting the selection of routing; executing, by the service network, the set-up of a connection from the first terminal to the second terminal along the selected route based on instructions given by the first terminal.

The invention also relates to a telecommunication arrangement comprising: a first terminal in a first telecommunication network, a second terminal in a second telecommunication network, at least one operator server for maintaining the telecommunication networks and a service network connecting the telecommunication networks. In the arrangement of the invention, the service network is configured to retrieve data affecting the selection of routing from one or more operator servers; send said data affecting the selection of routing to the first terminal and set up a connection from the first terminal to the second terminal along the route selected by the first terminal; the operator server is configured to give said data affecting the selection of routing; the first terminal is configured to select the desired route based on said data affecting the selection of routing.

Preferred embodiments of the invention are described in the dependent claims.

The method and arrangement of the invention bring about a plurality of advantages. The user of operator and network services is able to select the route along which the connection is established. This provides a way to select the most appropriate route, e.g. the most inexpensive or the one having the best quality, for each particular situation.

### LIST OF FIGURES

In the following, preferred embodiments of the invention will be described in detail with reference to the accompanying drawings, in which
Figure 1 shows an example of a telecommunication arrangement of the solution presented,
Figure 2 shows ways to set up a connection according to the solution presented.

### DESCRIPTION OF EMBODIMENTS

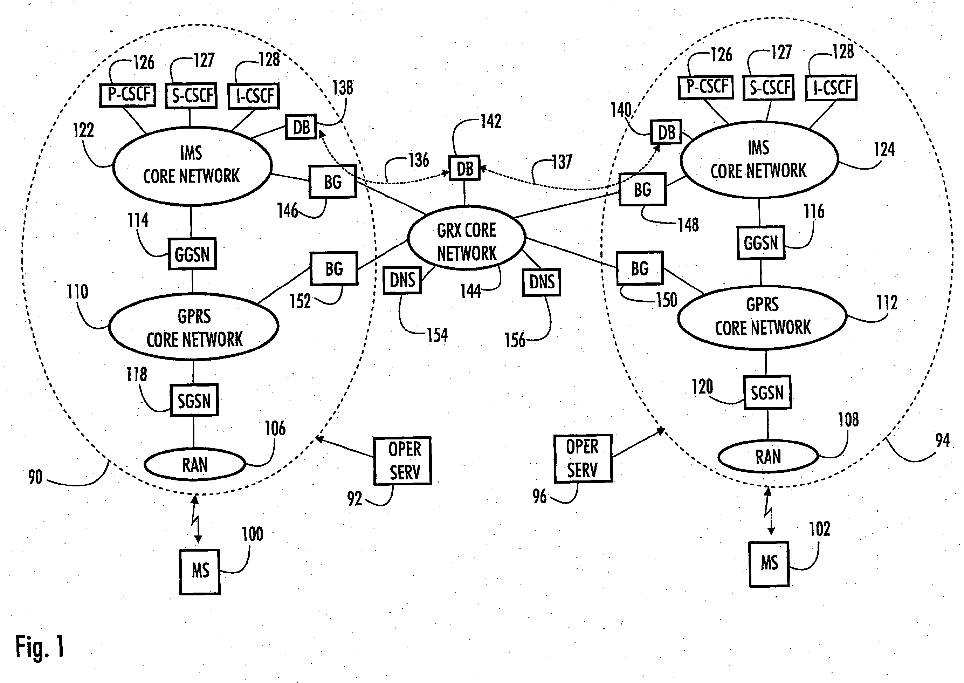

Let us next study the example of Figure 1 of a telecommunication system, to which preferred embodiments of the invention are applicable. Figure 1 illustrates the structure of the UMTS (Universal Mobile Telecommunications System) system and, more exactly, the third standardization version of the UMTS, in the IMS (Internet Protocol Multimedia Subsystem) environment. Since second generation and third generation radio systems, and various hybrids thereof, are in global use and continuously being developed, the system illustrated in Figure 1 comprises network elements of different generations in parallel. In the description, the representative of the so-called 2.5-generation system is a GSM/GPRS system applying the GPRS technology (General Packet Radio System), which is based on packet-switched data transmission, and the representative of a third generation system is a system called IMT-2000 (International Mobile Telecommunications 2000) and UMTS, for example. However, the embodiments are not restricted to these systems, described by way of example, but a person skilled in the art is able to apply the solution of the invention also to other systems.

Generally, a telecommunication system may be defined to comprise terminals and a network part comprising the fixed infrastructure of a radio system, i.e. a core network, a radio access network and a base station system. The terminals may be user equipment or mobile phones, for example.

Figure 1 shows terminals 100, 102 comprising an antenna, via which the transceivers comprised by the terminals 100, 102 receive and send signals to a radio path. The terminal 100, 102 may also comprise a user interface typically composed of a loudspeaker, a microphone, a display and a keyboard, and a battery, which, however, are not described herein in detail.

The terminals 100, 102 communicate via radio access networks 106, 108 (RAN, Radio Access Network) with telecommunication networks 90, 94, such as their home networks. Figure 1 illustrates the telecommunication networks 90, 94 by areas outlined with dashed lines. The radio access network 106, 108 supports services incoming via the telecommunication networks 90, 94. In Figure 1, the telecommunication networks 90, 94, maintained by different operators and controlled by operator servers 92, 96, comprise GPRS core networks 110 and 112 and IMS (Internet Protocol Multimedia Subsystem) core networks 122, 124. The GPRS (General Packet Radio System) core network 110, 112 is typically implemented as an Internet Protocol (IP) based network, wherein data packets are transferred between different GPRS network elements.

The elements of the GPRS core networks 110, 112, a serving GPRS Support Node (SGSN) 118, 120 and a Gateway GPRS Support Node (GGSN) 114, 116 attend to the implementation of packet-switched connections. The serving GPRS support node (SGSN) 118, 120 is the core of the packet-switched side of the GPRS core network 110, 112. Its main task is to send and receive packets with the terminal 100, 102 supporting packet-switched transfer by using the radio access network 106, 108. The serving GPRS support node 118, 120 comprises subscriber data and location data relating to the terminal 100, 102. For every terminal communicating with it, it stores various parameters that are used for routing packets, e.g. data about the location of the terminal. The gateway GPRS support node (GGSN) 114, 116 routes traffic outgoing from the GPRS core network 110, 112 to external networks, such as the Internet.

The IMS (Internet Protocol Multimedia Subsystem) core network 122, 124 is a subsystem providing IP multimedia services to complement the services of the other networks. The IMS core network 122, 124 comprises the following network parts: a Call Processing Server (CPS), a Home Subscriber Server (HSS) and a Gateway (GW). The call processing server is a server that attends to call signalling between the network parts and supports several simultaneous calls through a trunked network. The call processing server comprises both gateway and gatekeeper (GK) functions. A home subscriber server is the host database of a given user and is used for instance for maintaining a list of user-related properties and services and for following the locations of the users. The home subscriber server attends to the same functions as does a Home Location Register (HLR), but it also communicates through IP-based interfaces. In addition, the home subscriber server attends to UMS (User Mobility Server) functions. The UMS participates in mobility management, location establishment and authentication. The gateway is a switching node that compiles file formats, signalling protocols and sometimes address data to enable communication between two different networks.

The elements of the IMS core network 122, 124 include a P-CSCF (Proxy Call State Control Function) 126, an S-CSCF (Serving Call State Control Function) 127 and an I-CSCF (Interrogating Call State Control Function) 128. The P-CSCF 126 attends to call state control functions and is the first contact point of a core packet network in accessing an IP network. The S-CSCF 127 is part of the call state control function (CSCF), used for terminal-originating connections and for supporting terminal-terminating connections. The I-CSCF 128 is part of the call state control function, used for terminal-terminating connections and for specifying how terminal-terminating calls are routed. The I-CSCF 128 inquires of data enabling the routing of a call to the serving CSCF (Call State Control Function) from a home subscriber server (HSS). The CSCF is the main call control element in the IMS core network and it attends to call control functions, service switching functions, address compilation functions and vocoder negotiation functions.

Via border gateways (BG) 146, 148, 150, 152, the GPRS core networks 110, 112 and the IMS core networks 122, 124, controlled by the different operator servers 92, 96, are able to communicate with the service network connecting them, such as a GRX core network 144.

The GRX (GPRS Roaming exchange) core network 144 is a centralized IP (Internet Protocol) routing solution between IP networks, such as the GPRS and UMTS networks. It is specified in the IREG (International Roaming Expert Group) recommendation (IR.34). The GRX core network 144 attends to the connectivity between the telecommunication networks 90, 94 maintained by different operators. The GRX 144 also transfers IP data of roaming users when they use GPRS services in a visited network 90, 94 outside their home network 90, 94. Thus, the operator server 92, 96 only needs one connection to the GRX core network 144 to be able to establish a global connection to any foreign operator server. The GRX core network 144 enables IP traffic between GPRS networks. Domain Name Servers 154, 156 (DNS) that attend to e.g. Routing Area Identity (RAI) and Access Point Name (APN) compilations into IP addresses are also integrated into the service network, herein the GRX core network 144.

In the example of Figure 1, the first terminal 100 is a client of the telecommunication network 90 maintained by the first operator server 92, and the second terminal 102 is a client of the telecommunication network 94 maintained by the second operator server 96. The GRX core network 144 is a network that connects the IMS core networks 122, 124 comprised by the telecommunication networks 90, 94 controlled by the operator servers 92, 96.

When a connection, e.g. a call, is to be set up from the first terminal 100 to the second terminal 102, a connection set-up request is sent, e.g. the number of the second terminal 102 is dialled in the first terminal 100, to the operator server 92. Since the second terminal 102 is not within the area of the IMS core network 122 of the first terminal 100, the IMS core network 122 of the operator server 92 relays the connection set-up request to the service network connecting the IMS core networks 122, 124 maintained by the operator services 92, 96, i.e. the GRX core network 144. The GRX core network 144 attends to routing the call to the desired address. In roaming, the terminal 100, 102 is able to use resources of another network than its home network 90, 94. This is why the users of the terminals 100, 102 are able to use their equipment outside the service area of their home network 90, 94. In a routing contract, the operator server 92, 96 of the home network 90, 94 and the operator of the service network are able to agree on several issues, such as tariffs and prices, signalling and traffic data, service level agreements and problem solving.

Preferred embodiments of the invention allow the first terminal 100 to select the desired route among the routing alternatives sent to it. In a preferred embodiment of the invention, a connection set-up request is sent from the first terminal 100 to the operator server 92 and the connection set-up request is relayed to a service network, such as the GRX core network 144, connecting the home networks 90, 94 of the terminals 100, 102. Next the GRX core network 144 retrieves data affecting the selection of routing from one or more operator servers 92, 96 and sends said data affecting the selection of routing to the first terminal 100, which selects the desired route based on said data affecting the selection of routing. Finally, a connection is established from the first terminal 100 to the second terminal 102 along the selected route.

It is also feasible that, upon sending the connection set-up request, the first terminal 100 is not within the area of its home network, but is roaming the area of another telecommunication network 90, 94. However, the connection set-up method of the invention operates equally well in a roaming situation. In a roaming situation, the first terminal 100 sends a connection set-up request to the operator server 92, 96 that maintains the telecommunication network 90, 94 whose area the first terminal 100 is roaming. Said visited telecommunication network 90, 94 operator server 92, 96 then relays the connection set-up request to the GRX core network 144 if the second terminal 102 is not within the area of the same telecommunication network 90, 94 as the first terminal 100. The GRX core network 144 retrieves the data affecting the selection of routing and sends the data to the first terminal 100, which selects the desired route based on the data. Accordingly, the first terminal 100 may be within the area of any telecommunication network 90, 94, such as the home network or a visited network, when sending the connection set-up request to the operator server 92, 96.

In a preferred embodiment of the invention, a connection set-up request is sent from the first terminal 100 for instance by selecting the desired number or address. Alternatively, the number or address may also be selected from a list displayed on the display of the terminal 100 or from an Internet service. The operator server 92 of the home network 90 of the first terminal 100 relays the connection set-up request to the GRX core network 144 if the desired address is not within the area of the IMS network 122 of the home network. In the GRX core network 144, the destination of the desired address is studied, after which the data affecting the selection of routing are sent to the first terminal 100. The GRX core network 144 comprises e.g. a database or a proxy server 142, which directs the queries about obtaining the data affecting the selection of routing to databases 138, 140 maintained by the different operator servers 92, 96. The proxy server 142 directs the queries about obtaining the data affecting the routing and maintained in the databases 138, 140 of the telecommunication networks 90, 94 via the border gateways 146, 148, 152, 156, denoted in Figure 1 by dashed line arrows 136, 137. Data affecting the selection of routing, such as prices, connection quality, delay, bandwidth, security, set-up rate, and loyal customer benefits, are maintained in the databases 138, 140, maintained by the operator servers 92, 96. The GRX core network 144 retrieves data from the databases 138, 140 maintained by the operator servers 92, 96, i.e. the operator servers 92, 96 do not have to send the data separately to the GRX core network 144. For example, the operator server 92, 96 could only notify the GRX core network 144 of its willingness to serve given routes. In signalling between the IMS core networks 122, 124 and the GRX network 144, the SIP (Session Initiation Protocol) protocol, for example, is used. The SIP (Session Initiation Protocol) is a control protocol for the set-up, adaptation and termination of sessions between one or more participants.

Consequently, the GRX core network 144 obtains data affecting the selection of routing from the databases 138, 140 maintained by the different operator servers 92, 96, and sends them to the first terminal 100. The first terminal 100 uses the obtained data to select the desired route for instance by manual keystrokes. Alternatively, the operator server 92, 96 may use instructions obtained from the first terminal 100 to automatically select the most favourable route, for example, whereby the connection is established along said route.

Since the data affecting the selection of routing are sent to the first terminal 100, its user does not have to know in advance anything about the different operator servers 92, 96 or the telecommunication networks 90, 94, their quality levels or prices. It is also feasible that the user selects in advance an alternative according to which all connections are established along the most favourable route, for example. In that case, the user of the first terminal 100 does not have to manually select the most favourable route when establishing the connection; instead, the operator server 92, 96 does that automatically. The first terminal 100 does not either have to be a client of the telecommunication network 90, 94 via which the route selected passes. The GRX core network 144 maintains, for example via contracts, client relations to the services and telecommunication networks 90, 94 provided by different operators.

In a preferred embodiment of the invention, upon establishment of a connection, a given prefix can be prefixed to the number dialled, whereby the connection is automatically routed based on the selected prefix. The prefix can be used to express the readiness to obtain as good a quality as possible or as inexpensive a price as possible in the establishment of a connection on the route selected. In a second preferred embodiment, upon establishment of a connection, the WAP/web browser of the first terminal 100 is used for opening a user's locally stored or web-located calling page. Pushing a link on said calling page enables the selection of the desired receiver and the properties required of the route. The terminal 100 then starts to establish a connection to the desired address, and the route is selected based on the desired properties of the route as selected from the calling page. It is also feasible for the user of the first terminal 100 to sign a separate contract with the operator maintaining the home network 90 used, the contract specifying the factors based on which calls are routed in each particular case. In this case, for instance office-hour calls can be automatically routed along the route having the highest quality, the most favourable route being automatically used during leisure. Alternatively, a dial-on-demand service maintained by the operator server 92, 96 can also be utilized, the connection being established for instance by using a browser to access the page of the dial-on-demand service, by selecting the person sought and the desired parameters affecting the selection of routing, after which the dial-on-demand service calls both parties and connects them.

In a preferred embodiment of the invention, separate signalling is used to inquire for the data affecting the selection of routing before the connection is established, after which the user makes a selection and connection set-up starts. The amount of data affecting the selection of routing varies depending on the GRX core network 144 and the operators, and the user is able to independently decide the criteria desired for the connection. Preferred embodiments of the invention enable real-time selection of the desired routing alternative upon establishment of a connection.

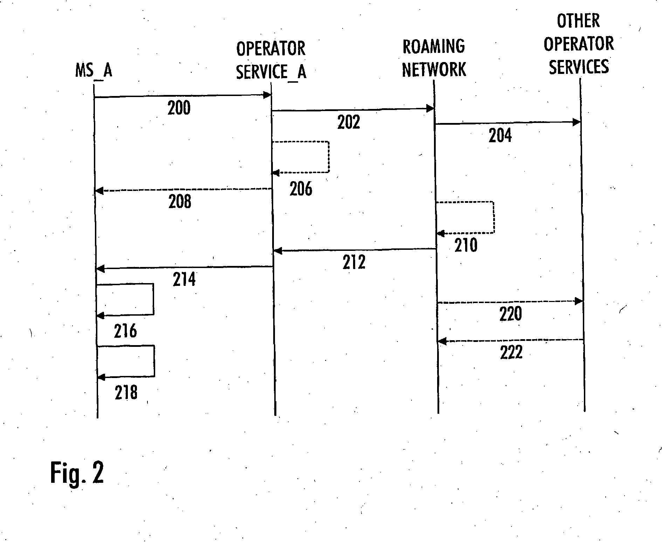

Let us next study the method steps of a preferred embodiment of the invention by means of Figure 2. In step 200, a terminal (MS-A) uses separate SIP (Session Initiation Protocol) signalling to send a query about feasible routes or for instance prices for instance to an operator server (OPERATOR SERVICE_A) of the home network. In step 202, the operator server (OPERATOR SERVICE_A) relays the query to a centralized service network (ROAMING NETWORK), such as a GRX core network. Alternatively, in step 206, the operator server (OPERATOR SERVICE_A) could make a local decision based on data stored in its cache memory, for example. After step 206, in step 208, the operator server (OPERATOR SERVICE_A) sends a response regarding the data affecting the selection of routing to the terminal (MS_A).

After step 202, in step 204, the service network (ROAMING NETWORK) inquires for routing data from one or more other operator servers (OTHER OPER SERVICES). Alternatively, in step 210, the service network (ROAMING NETWORK) could also make a local decision based on the cache memory. In step 212, the service network (ROAMING NETWORK) returns the data to the operator server (OPERATOR SERVICE_A). In step 214, the operator server (OPERATOR SERVICE_A) returns the data to the terminal (MS_A). Next, in step 216, the terminal (MS_A) displays the possible routing alternatives or prices, for example, on its display to the user. Finally, in step 218, the desired route is selected and the connection is set up along the desired route in the first terminal, for instance according to the user's predetermined selection.

The service network (ROAMING NETWORK) may also maintain a database of data affecting the selection of routing by making for instance spontaneous update requests to the operator servers (OTHER OPER SERVICES) for the data in its cache memory, as in step 220. Alternatively, in step 222, the different operator servers (OTHER OPER SERVICES) make spontaneous "push" updates to the data affecting the selection of routing and maintained by the service network (ROAMING NETWORK).

Although the invention is described above with reference to the example according to the attached drawings, it is apparent that the invention is not limited thereto, but can be modified in a plurality of ways within the scope as defined in the appended claims.

## Claims

1. A method of setting up a connection in a telecommunication arrangement, the method comprising:
receiving (200) a connection set up request from a first terminal in a first telecommunications network in an operator server maintaining telecommunication networks,
relaying (202) the connection set up request from the operator server to a service network connecting the telecommunication networks, **characterized by**
maintaining, by operator servers (92, 96) in the service network, at least one database (138, 140) with data affecting the selection of routing on the basis of: connection quality, delay, bandwidth, security, set-up rate or loyal customer benefits;
executing (204), by the service network, the retrieval of data affecting the selection of routing from the at least one data base (138, 140) when the connection set-up request is received;
sending (214), from the service network, said data affecting the selection of routing to the first terminal; and
executing (218), by the service network, the set-up of a connection from the first terminal to a second terminal in a second telecommunication network along a route selected based on instructions received from the first terminal.

2. A method as claimed in claim 1, **characterized by** the telecommunication network being a home network or a visited network.

3. A method as claimed in claim 1, **characterized by** the telecommunication network comprising an IMS (Internet Protocol Multimedia Subsystem) network.

4. A method as claimed in claim 1, **characterized by** the service network being a GRX (GPRS Roaming exchange) network.

5. A method as claimed in claim 1, **characterized by** making update requests to the operator servers for maintaining the database comprising the data affecting the selection of routing.

6. A method as claimed in claim 1, **characterized by** the operator servers sending update messages for maintaining the database comprising the data affecting the selection of routing.

7. A method as claimed in claim 1, **characterized by** directing the retrievals of the data affecting the selection of routing via a proxy server comprised by the service network.

8. A method as claimed in claim 1, **characterized by** selecting the route automatically for the first terminal on the basis of predetermined properties desired of the route.

9. A method as claimed in claim 1, **characterized by** the connection set-up request including the number or address of the second terminal.

10. A method as claimed in claim 9, **characterized by** receiving the connection set-up request from an Internet service where the number or address of the second terminal has been selected.

11. A method as claimed in claim 9, **characterized by** setting up the connection along a given route once a prefix referring to a desired property of the given route is prefixed to the number of the second terminal.

12. A method as claimed in claim 1, **characterized by** receiving the connection set-up request via a WAP/web browser link of the first terminal.

13. A method as claimed in claim 12, **characterized by** receiving instructions for selecting the route from the first terminal via the WAP/web browser.

14. A method as claimed in claim 1, **characterized by** the selection criteria of the desired routes being predetermined and by selecting the route on the basis of the predetermined selection criteria.

15. A method as claimed in claim 1, **characterized by** inquiring for instructions for selecting the route by means of separate signalling before the connection is established.

16. A telecommunication arrangement comprising: a first terminal (100) in a first telecommunication network (90), a second terminal (102) in a second telecommunication network (94), at least one operator server (92, 96) and a service network (144) connecting the telecommunication networks, the operator server being configured to receive a connection set up request from a first terminal in a first telecommunications network, and to relay the connection set up request from the operator server to the service network, **characterized in that**:
the service network (144) comprises at least one database (138, 140) maintained by operator servers (92, 96), the at least one data base (138, 140) comprising data affecting the selection of routing on the basis of: connection quality, delay, bandwidth, security, set-up rate or loyal customer benefits;
the service network (144) is configured to retrieve data affecting the selection of routing from the at least one data base (138, 140), to send said data affecting the selection of routing to the first terminal (100), and to execute setting up a connection from the first terminal (100) to the second terminal (102) along a route on the basis of instructions received from the first terminal (100) as a response to said data.

17. An arrangement as claimed in claim 16, **characterized in that** the telecommunication network (90, 94) is a home network or a visited network.

18. An arrangement as claimed in claim 16, **characterized in that** the telecommunication network (90, 94) comprises an IMS (Internet Multimedia Subsystem) network.

19. An arrangement as claimed in claim 16, **characterized in that** the service network (144) is a GRX (GPRS Roaming exchange) network.

20. An arrangement as claimed in claim 19, **characterized in that** the operator server (92, 96) is configured to send update messages for maintaining the database (142) comprising the data affecting the selection of routing.

21. An arrangement as claimed in claim 16, **characterized in that** the service network (144) is configured to direct the retrievals of the data affecting the selection of routing via a proxy server (142) comprised by the service network (144).

22. An arrangement as claimed in claim 16, **characterized in that** the arrangement is configured to select the route automatically for the first terminal (100) on the basis of predetermined properties desired of the route.

23. An arrangement as claimed in claim 16, **characterized in that** the connection set-up request includes the number or address of the second terminal (102).

24. An arrangement as claimed in claim 23, **characterized in that** the connection set-up request is received from an Internet service where the number or address of the second terminal (102) has been selected.

25. An arrangement as claimed in claim 23, **characterized in that** the arrangement is configured to set up the connection along a given route once a prefix referring to a desired property of the given route is prefixed to the number of the second terminal (102).

26. An arrangement as claimed in claim 16, **characterized in that** the connection set-up request is received via a WAP/web browser link.

27. An arrangement as claimed in claim 26, **characterized in that** the instructions for selecting the route are received from the first terminal via the WAP/web browser.

28. An arrangement as claimed in claim 16, **characterized in that** the arrangement is configured to select the route on the basis of predetermined selection criteria.

29. An arrangement as claimed in claim 16, **characterized in that** the arrangement is configured to inquire for instructions of the first terminal (100) for selecting the route by means of separate signalling before the connection is established.

## Patentansprüche

1. Verfahren zum Erstellen einer Verbindung in einer Telekommunikationsanlage, wobei das Verfahren umfasst:
Empfangen (200) einer Verbindungserstellungsanfrage von einem ersten Endgerät in einem ersten Telekommunikationsnetzwerk in einem Betriebsserver, der Telekommunikationsnetze unterhält,
Weiterleiten (202) der Verbindungserstellungsanfrage von dem Betriebsserver an ein Dienstnetzwerk, das die Telekommunikationsnetzwerke verbindet,
**gekennzeichnet durch**
Unterhalten, **durch** Betriebsserver (92, 96) in dem Dienstnetzwerk, mindestens einer Datenbank (138, 140) mit Daten, die die Auswahl eines Routings beeinflussen auf Grundlage von: Verbindungsqualität, Verzögerung, Bandbreite, Sicherheit, Erstellungsrate oder Vorteilen für treue Kunden;
Ausführen (204), **durch** das Dienstnetzwerk, eines Abrufens von Daten, die die Auswahl des Routings beeinflussen, aus der mindestens einen Datenbank (138, 140), wenn die Verbindungserstellungsanfrage empfangen wird;
Senden (214), von dem Servicenetzwerk, der Daten, die die Auswahl des Routings beeinflussen, an das erste Endgerät; und
Ausführen (218), **durch** das Servicenetzwerk, des Erstellens einer Verbindung von dem ersten Endgerät zu einem zweiten Endgerät in einem zweiten Telekommunikationsnetzwerk entlang einer aufgrund von Instruktionen, die von dem ersten Endgerät empfangen werden, ausgewählten Route.

2. Verfahren gemäß Anspruch 1, **dadurch gekennzeichnet, dass** das Telekommunikationsnetzwerk ein Heimnetzwerk oder ein besuchtes Netzwerk ist.

3. Verfahren gemäß Anspruch 1, **dadurch gekennzeichnet, dass** das Telekommunikationsnetzwerk ein IMS-(Internet Protocol Multimedia Subsystem-)Netzwerk umfasst.

4. Verfahren gemäß Anspruch 1, **dadurch gekennzeichnet, dass** das Dienstnetzwerk ein GRX-(GPRS Roaming eXchange-)Netzwerk ist.

5. Verfahren gemäß Anspruch 1, **gekennzeichnet, durch** das Stellen von Updateanfragen an die Betriebsserver zum Unterhalten der Datenbank, die die Daten umfasst, die die Auswahl des Routings beeinflussen.

6. Verfahren gemäß Anspruch 1, **dadurch gekennzeichnet, dass** die Betriebsserver Updatenachrichten zum Unterhalten der Datenbank, die die Daten umfasst, die die Auswahl des Routings beeinflussen, senden.

7. Verfahren gemäß Anspruch 1, **gekennzeichnet durch** Leiten der Abrufe der Daten, die die Auswahl des Routings beeinflussen, über einen Proxyserver, der in dem Servicenetzwerk enthalten ist.

8. Verfahren gemäß Anspruch 1, **gekennzeichnet durch** automatisches Auswählen der Route für das erste Endgerät auf Grundlage von vorbestimmten Eigenschaften, die von der Route gewünscht sind.

9. Verfahren gemäß Anspruch 1, **dadurch gekennzeichnet, dass** die Verbindungserstellungsanfrage die Nummer oder Adresse des zweiten Endgeräts beinhaltet.

10. Verfahren gemäß Anspruch 9, **gekennzeichnet durch** Empfangen der Verbindungserstellungsanfrage von einem Internetdienst, wo die Nummer oder Adresse des zweiten Endgeräts ausgewählt worden ist.

11. Verfahren gemäß Anspruch 9, **gekennzeichnet durch** Erstellen der Verbindung entlang einer gegebenen Route, sobald ein Präfix, das sich auf eine gewünschte Eigenschaft der gegeben Route bezieht, vor die Nummer des zweiten Endgeräts gesetzt worden ist.

12. Verfahren gemäß Anspruch 1, **gekennzeichnet durch** Empfangen der Verbindungserstellungsanfrage über einen WAP-M/eb-Browserlink des ersten Endgeräts.

13. Verfahren gemäß Anspruch 12, **gekennzeichnet durch** Empfangen von Instruktionen zum Auswählen der Route von dem ersten Endgerät über den WAP-/Web-Browser.

14. Verfahren gemäß Anspruch 1, **dadurch gekennzeichnet, dass** die Auswahlkriterien der gewünschten Routen vorbestimmt sind, und durch Auswählen der Route auf der Grundlage der vorbestimmten Auswahlkriterien.

15. Verfahren gemäß Anspruch 1, **gekennzeichnet durch** Anfragen nach Instruktionen zum Auswählen der Route mittels separaten Signalisierens, bevor die Verbindung aufgebaut wird.

16. Telekommunikationsanlage, umfassend: ein erstes Endgerät (100) in einem ersten Telekommunikationsnetzwerk (90), ein zweites Endgerät (102) in einem zweiten Telekommunikationsnetzwerk (94), mindestens einen Betriebsserver (92, 96) und ein Dienstnetzwerk (144), das die Telekommunikationsnetzwerke miteinander verbindet, wobei der Betriebsserver dafür eingerichtet ist, eine Verbindungserstellungsanfrage von einem ersten Endgerät in einem ersten Telekommunikationsnetzwerk zu empfangen und die Verbindungserstellungsanfrage von dem Betriebsserver an das Dienstnetzwerk weiterzuleiten, **dadurch gekennzeichnet, dass**:
das Dienstnetzwerk (144) mindestens eine Datenbank (138, 140) umfasst, die durch Betriebsserver (92, 96) unterhalten wird, wobei die mindestens eine Datenbank (138, 140) Daten umfasst, die die Auswahl eines Routings beeinflusst auf der Grundlage von: Verbindungsqualität, Verzögerung, Bandbreite, Sicherheit, Erstellungsrate oder Vorteilen für treue Kunden;
wobei das Dienstnetzwerk (144) dafür eingerichtet ist, aus der mindestens einen Datenbank (138, 140) Daten abzurufen, die die Auswahl des Routings beeinflussen, die Daten, die die Auswahl des Routings beeinflussen, an das erste Endgerät (100) zu senden, und ein Erstellen einer Verbindung von dem ersten Endgerät (100) zu dem zweiten Endgerät (102) entlang einer Route auf der Grundlage von Instruktionen, die von dem ersten Endgerät (100) als eine Antwort auf die Daten empfangen werden, auszuführen.

17. Anlage gemäß Anspruch 16, **dadurch gekennzeichnet, dass** das Telekommunikationsnetzwerk (90, 94) ein Heimnetzwerk oder ein besuchtes Netzwerk ist.

18. Anlage gemäß Anspruch 16, **dadurch gekennzeichnet, dass** das Telekommunikationsnetzwerk (90, 94) ein IMS-(Internet Protocol Multimedia Subsystem-)Netzwerk umfasst.

19. Anlage gemäß Anspruch 16, **dadurch gekennzeichnet, dass** das Dienstnetzwerk (144) ein GRX-(GPRS Roaming eXchange-)Netzwerk ist.

20. Anlage gemäß Anspruch 19, **dadurch gekennzeichnet, dass** der Betriebsserver (92, 96) dafür eingerichtet ist, Updatenachrichten zum Unterhalten der Datenbank (142), die die Daten umfasst, die die Auswahl des Routings beeinflussen, zu senden.

21. Anlage gemäß Anspruch 16, **dadurch gekennzeichnet, dass** das Dienstnetzwerk (144) dafür eingerichtet ist, die Abrufe der Daten, die die Auswahl des Routings beeinflussen, über einen Proxyserver (142) zu leiten, der in dem Servicenetzwerk (144) enthalten ist.

22. Anlage gemäß Anspruch 16, **dadurch gekennzeichnet, dass** die Anlage dafür eingerichtet ist, die Route für das erste Endgerät (100) automatisch auf Grundlage von vorbestimmten Eigenschaften, die von der Route gewünscht sind, auszuwählen.

23. Anlage gemäß Anspruch 16, **dadurch gekennzeichnet, dass** die Verbindungserstellungsanfrage die Nummer oder Adresse des zweiten Endgeräts (102) beinhaltet.

24. Anlage gemäß Anspruch 23, **dadurch gekennzeichnet, dass** die Verbindungserstellungsanfrage von einem Internetdienst empfangen wird, wo die Nummer oder Adresse des zweiten Endgeräts (102) ausgewählt worden ist.

25. Anlage gemäß Anspruch 23, **dadurch gekennzeichnet, dass** die Anlage dafür eingerichtet ist, die Verbindung entlang einer gegebenen Route zu erstellen, sobald ein Präfix, das sich auf eine gewünschte Eigenschaft der gegeben Route bezieht, vor die Nummer des zweiten Endgeräts (102) gesetzt worden ist.

26. Anlage gemäß Anspruch 16, **dadurch gekennzeichnet, dass** die Verbindungserstellungsanfrage über einen WAP-/Web-Browserlink empfangen wird.

27. Anlage gemäß Anspruch 26, **dadurch gekennzeichnet, dass** die Instruktionen zum Auswählen der Route von dem ersten Endgerät über den WAP-M/eb-Browser empfangen werden.

28. Anlage gemäß Anspruch 16, **dadurch gekennzeichnet, dass** die Anlage dafür eingerichtet ist, die Route auf der Grundlage vorbestimmter Auswahlkriterien auszuwählen.

29. Anlage gemäß Anspruch 16, **dadurch gekennzeichnet, dass** die Anlage dafür eingerichtet ist, nach Instruktionen für das erste Endgerät (100) zum Auswählen der Route mittels separaten Signalisierens, bevor die Verbindung aufgebaut wird, anzufragen.

## Revendications

1. Procédé d'établissement d'une connexion dans un aménagement de télécommunications, le procédé comprenant les étapes consistant à :
recevoir (200) une demande d'établissement de connexion d'un premier terminal d'un premier réseau de télécommunications auprès d'un serveur opérateur entretenant des réseaux de télécommunications,
relayer (202) la demande d'établissement de connexion du serveur opérateur à un réseau de service connectant les réseaux de télécommunications, **caractérisé par** les étapes consistant à :
entretenir par des serveurs opérateurs (92, 96) dans le réseau de service au moins une base de données (138, 140) avec des données affectant la sélection de routage sur la base de la qualité de la connexion, d'un retard, de la largeur de bande, de la sécurité, de la vitesse d'établissement ou de bénéfices aux clients fidèles ;
exécuter (204) par le réseau de service la récupération de données affectant la sélection de routage depuis la au moins une base de données (138, 140) lorsque la demande d'établissement de connexion est reçue ;
envoyer (214) depuis le réseau de service lesdites données affectant la sélection de routage vers le premier terminal ; et
exécuter (218) par le réseau de service l'établissement d'une connexion du premier terminal au second terminal dans un second réseau de télécommunications le long d'une route choisie sur la base d'instructions reçues du premier terminal.

2. Procédé selon la revendication 1, **caractérisé en ce que** le réseau de télécommunications est un réseau domestique ou un réseau visité.

3. Procédé selon la revendication 1, **caractérisé en ce que** le réseau de télécommunications comprend un réseau IMS (Sous-système multimédia à protocole Internet).

4. Procédé selon la revendication 1, **caractérisé en ce que** le réseau de service est un réseau GRX (exchange itinérant GPRS).

5. Procédé selon la revendication 1, **caractérisé en ce que** l'on effectue des demandes de mise à jour aux serveurs opérateurs pour entretenir la base de données comprenant les données affectant la sélection de routage.

6. Procédé selon la revendication 1, **caractérisé en ce que** les serveurs opérateurs envoient des messages de mise à jour pour entretenir la base de données comprenant les données affectant la sélection de routage.

7. Procédé selon la revendication 1, **caractérisé en ce que** l'on dirige les récupérations des données affectant la sélection de routage via un serveur mandataire compris dans le réseau de service.

8. Procédé selon la revendication 1, **caractérisé en ce que** l'on sélectionne la route automatiquement pour le premier terminal sur la base de propriétés prédéterminées souhaitées de la route.

9. Procédé selon la revendication 1, **caractérisé par** la demande d'établissement de connexion comprenant le numéro ou l'adresse du second terminal.

10. Procédé selon la revendication 9, **caractérisé par** la réception de la demande d'établissement de connexion d'un service Internet où le numéro ou l'adresse du second terminal a été choisi(e).

11. Procédé selon la revendication 9, **caractérisé par** l'établissement de la connexion le long d'une route donnée une fois qu'un préfixe se référant à une propriété souhaitée de la route donnée est ajouté au numéro du second terminal.

12. Procédé selon la revendication 1, **caractérisé par** la réception de la demande d'établissement de connexion via une liaison WAP/navigateur web du premier terminal.

13. Procédé selon la revendication 12, **caractérisé par** la réception d'instructions pour sélectionner la route depuis le premier terminal via le WAP/navigateur web.

14. Procédé selon la revendication 1, **caractérisé en ce que** les critères de sélection des routes souhaitées sont prédéterminés et l'on choisit la route sur la base des critères de sélection prédéterminés.

15. Procédé selon la revendication 1, **caractérisé en ce que** l'on interroge des instructions pour sélectionner la route au moyen d'une signalisation séparée avant que la connexion ne soit établie.

16. Aménagement de télécommunications comprenant un premier terminal (100) dans un premier réseau de télécommunications (90), un second terminal (102) dans un second réseau de télécommunications (94), au moins un serveur opérateur (92, 96) et un réseau de service (144) connectant les réseaux de télécommunications, le serveur opérateur étant configuré pour recevoir une demande d'établissement de connexion d'un premier terminal d'un premier réseau de télécommunications, pour relayer la demande d'établissement de connexion du serveur opérateur au réseau de service, **caractérisé en ce que** :
le réseau de service (144) comprend au moins une base de données (138, 140) entretenue par des serveurs opérateurs (92, 96), la au moins une base de données (138, 140) comprenant des données affectant la sélection du routage sur la base de la qualité de la connexion, d'un retard, de la largeur de bande, de la sécurité, de la vitesse d'établissement ou de bénéfices aux clients fidèles ;
le réseau de service (144) est configuré pour récupérer des données affectant la sélection de routage depuis la au moins une base de données (138, 140), pour envoyer lesdites données affectant la sélection du routage vers le premier terminal (100) et pour exécuter l'établissement d'une connexion du premier terminal (100) au second terminal (102) le long d'une route sur la base d'instructions reçues du premier terminal (100) en réponse auxdites données.

17. Aménagement selon la revendication 16, **caractérisé en ce que** le réseau de télécommunications (90, 94) est un réseau domestique ou un réseau visité.

18. Aménagement selon la revendication 16, **caractérisé en ce que** le réseau de télécommunications (90, 94) comprend un réseau IMS (Sous-système multimédia à protocole Internet).

19. Aménagement selon la revendication 16, **caractérisé en ce que** le réseau de service (144) est un réseau GRX (exchange itinérant GPRS).

20. Aménagement selon la revendication 19, **caractérisé en ce que** le serveur opérateur (92, 96) est configuré pour envoyer des messages de mise à jour pour entretenir la base de données (142) comprenant les données affectant la sélection de routage.

21. Aménagement selon la revendication 16, **caractérisé en ce que** le réseau de service (144) est configuré pour diriger les récupérations des données affectant la sélection de routage via un serveur mandataire (142) compris dans le réseau de service (144).

22. Aménagement selon la revendication 16, **caractérisé en ce que** l'aménagement est configuré pour sélectionner la route automatiquement pour le premier terminal (100) sur la base de propriétés prédéterminées souhaitées de la route.

23. Aménagement selon la revendication 16, **caractérisé en ce que** la demande d'établissement de connexion comprend le numéro ou l'adresse du second terminal (102).

24. Aménagement selon la revendication 23, **caractérisé en ce que** la demande d'établissement de connexion est reçue d'un service Internet où le numéro ou l'adresse du second terminal (102) a été choisi(e).

25. Aménagement selon la revendication 23, **caractérisé en ce que** l'aménagement est configuré pour établir la connexion le long d'une route donnée une fois qu'un préfixe se référant à une propriété souhaitée de la route donnée est ajouté au numéro du second terminal (102).

26. Aménagement selon la revendication 16, **caractérisé en ce que** la demande d'établissement de connexion est reçue via une liaison WAP/navigateur web.

27. Aménagement selon la revendication 26, **caractérisé en ce que** les instructions pour sélectionner la route sont reçues du premier terminal via le WAP/navigateur web.

28. Aménagement selon la revendication 16, **caractérisé en ce que** l'aménagement est configuré pour sélectionner la route sur la base de critères de sélection prédéterminés.

29. Aménagement selon la revendication 16, **caractérisé en ce que** l'aménagement est configuré pour interroger des instructions du premier terminal (100) pour sélectionner la route au moyen d'une signalisation séparée avant que la connexion ne soit établie.
